# EUROPEAN PATENT APPLICATION

(11) **EP 4 707 111 A1**
(43) Date of publication of application: **11.03.2026**
(21) Application number: 24306464.9
(22) Date of filing: 06.09.2024
(51) Int. Cl.: B61D 27/00, F24F 13/24, B60H 1/00

(54) **SOUND ABSORPTION PLATE CONFIGURED FOR SOUND ABSORPTION IN A RAIL VEHICLE HVAC UNIT**

(71) Applicant: ALSTOM Holdings, 93400 Saint-Ouen-sur-Seine (FR)
(72) Inventor: Joveniaux, Philippe, 02170 LE NOUVION EN THIÉRACHE (FR)
(74) Representative: Plasseraud IP

(57) **Abstract**

The sound absorption plate (10) configured for sound absorption in a rail vehicle HVAC unit (15) extends along an elevation direction (Y1) between a planar inner wall (65) intended to be in contact with an air flow (F, 40) flowing in or from the HVAC unit and a planar outer wall (70), and comprises a plurality of resonator units (75), each resonator unit comprising a resonating chamber (85) having a void inner volume (V), and a cylindrical internal neck (90) extending along the elevation direction (Y1) between a first opening (95) flush with the inner wall (65) and a second opening (100) located inside the resonating chamber (85).

## Description

The present invention concerns a sound absorption plate configured for sound absorption in a rail vehicle HVAC unit and a rail vehicle comprising an HVAC unit and at least one such sound absorption plate.

In rail vehicle, such as for example train or subways, the Heating, Ventilation and Air Conditioning unit (hereafter, HVAC unit) is generating significant noise. In standstill condition, i.e. when the rail vehicle is not moving, the HVAC unit can even be a major noise contributor.

In order to increase passenger comfort, there is a need to limit the global noise and/or the tonal noise from the HVAC unit in the passenger compartment, for example to meet requirements set by an operator of the rail vehicle and/or of a standard.

For example, some subway operators wish to limit the global intensity of the noise due to the HVAC unit in the passenger compartment at less than 70 dB(A).

Regarding the tonal noise, there is a need to ensure that the spectral decomposition of the noise due to the HVAC unit in the passenger compartment does not comprise any frequency peak having an intensity higher than a respective reference intensity by more than a predetermined threshold, for example by more than 5dB.

CN111503410 discloses a HVAC damper to be positioned in a HVAC unit. The damper comprises a plurality of resonant chambers of different heights.

However, due to the difference in the heights of the resonant chamber, integration of the chambers in the HVAC unit is complex.

Furthermore, the resonant chambers of CN111503410 have little effect on low frequencies components of the sound coming from the HVAC unit, in particular on the components having frequencies lower than 500 Hz or 400 Hz.

Hence, one aim of the invention is to provide a sound absorption system configured for sound absorption of a rail vehicle HVAC unit, the sound absorption system being easy to mount on a rail vehicle, in particular taking into account the spatial constraints of the rail vehicle, the sound absorption system having low impact on the flow pattern of an air flow generated by the HVAC unit and allowing significant decrease of the intensity of the sound due to the HVAC unit in the passenger compartment at low frequencies.

To this end, the invention relates to a sound absorption plate configured for sound absorption in a rail vehicle HVAC unit,
the sound absorption plate extending along an elevation direction between a planar inner wall intended to be in contact with an air flow flowing in or from the HVAC unit and a planar outer wall,
the sound absorption plate comprising a plurality of resonator units,
each resonator unit comprising:
   - a resonating chamber having a void inner volume, and
   - a cylindrical internal neck extending along the elevation direction between a first opening flush with the inner wall and a second opening located inside the resonating chamber.

Since the cylindrical neck extends in the void inner volume, the total height of the resonator units is limited and all the resonator units may have the same height. Consequently, the sound absorption plate can be planar and have a restricted or limited height.

Further, by choosing the dimensions of the inner volume and/or of the internal neck, each resonator unit can be tuned so as to have one or more specific sound absorption bands, without having to change the external dimensions of the sound absorption plate.

Thus, the sound absorption plate is compact and easily tunable which renders its integration in a rail vehicle easy, in particular taking into account the high spatial constraints of the rail vehicle.

In addition, since the first openings are flush with the inner wall of the sound absorption plate, the sound absorption plate has low impact on the flow pattern of the air flow which noise must be dampened.

According to other advantageous aspects of the invention, the sound absorption plate comprises one or more of the following features, taken in isolation or in any technically possible combination:
- the void inner volume of the resonating chamber is the same for all the resonator units;
- at least two resonator units differ by a length of the neck along the elevation direction and/or a cross-sectional area of the neck orthogonally to the elevation direction;
- at least two resonator units have identical necks;
- for each resonator unit, the void inner volume and/or a length of the neck along the elevation direction and/or a cross-sectional area of the neck orthogonally to the elevation direction is chosen such that a resonance frequency of the resonator unit is comprised in the range [150 Hz; 600 Hz];
- the first openings of the resonator units are evenly spaced apart along a longitudinal direction of the inner wall orthogonal to the elevation direction and/or along a transverse direction of the inner wall orthogonal to the longitudinal direction and to the elevation direction;
- the sound absorption plate further comprises at least one through tapped hole equidistant from at least two first openings of at least two adjoining resonator units.

The invention further relates to a rail vehicle comprising at least one HVAC unit and at least one sound absorption plate according to any of the preceding embodiments.

According to other advantageous aspects of the invention, the rail vehicle comprises one or more of the following features, taken in isolation or in any technically possible combination:
- at least one of the at least one sound absorption plate is attached on an inner wall of the HVAC unit;
- at least one of the at least one sound absorption plate is positioned downstream and/or upstream a respective HVAC unit, preferably attached on a wall of a sheath for distributing the air flow in the rail vehicle or on a wall of a chimney connector connecting the HVAC unit with an air flow distribution tube for distributing the air flow in the rail vehicle or on a wall of a noise damper;
- the inner wall of the at least one sound absorption plate is flush with an inner surface of an adjoining thermal insulation plate.

Figure 1 is a 3D view of an embodiment of a sound absorption plate according to the invention;
Figure 2 is a sectional view of the sound absorption plate of figure 1 in an elevation plane, the sound absorption plate being 3D-printed;
Figure 3 is a view of an embodiment of a ceiling of a rail vehicle equipped with an HVAC unit and with the sound absorption plate of figure 1;
Figure 4 is a 3D view of a sheath of a chimney connector for connecting a HVAC unit with an air flow distribution tube for distributing the air flow in the rail vehicle, the chimney connector being equipped with a plurality of sound absorption plates according to the invention;
Figure 5 is a partial 3D view of an embodiment of the noise damper of figure 3;
Figure 6 is an exploded 3D view of the sound insulation plate of figure 1, showing two parts of the sound insulation plate produced by an injection-molding process and intended to be welded to one another, namely a first part comprising the planar outer wall and a second part comprising the planar inner wall.
Figure 7 is a 3D view of the sound insulation plate of figure 2 obtained in one piece with a 3D-printing process.
Figure 8 is another 3D view of the noise damper of figure 3, showing sound insulation plates according to the invention.

The invention relates to a sound absorption plate 10 configured for sound absorption in a rail vehicle HVAC unit 15.

The rail vehicle (not represented) is for example a train, a subway or a tramway.

The rail vehicle comprises one or more cars (not represented), each car extending a longitudinal direction X and comprising one or more passenger compartments 20, one or more Heating, Ventilation and Air Conditioning units (or equivalently, HVAC units) 15 and one or more sound absorption plates 10.

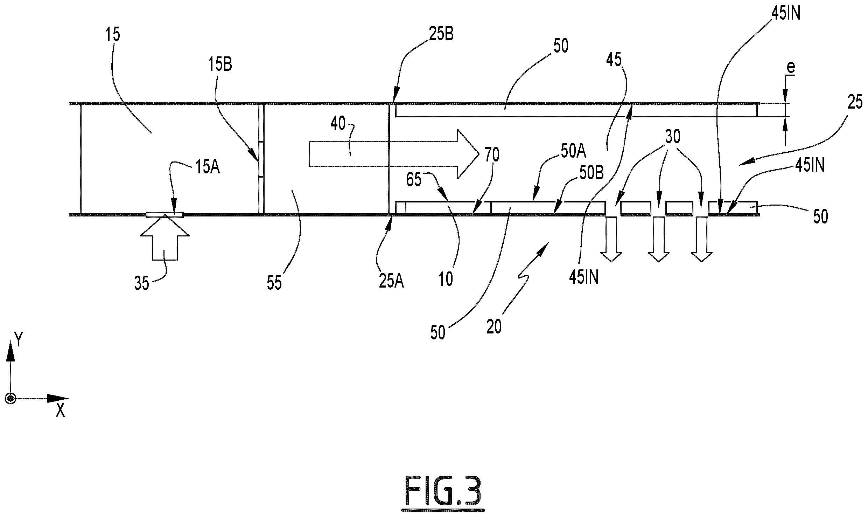

In a particular embodiment represented in figure 3, the HVAC unit 15 is positioned in a ceiling 25 of the car, between a lower surface 25A of the ceiling 25 and an upper surface 25B of the ceiling 25.

The lower surface 25A comprises one or more ceiling outlet holes 30 configured to allow air to flow from the ceiling 25 into the passenger compartment 20.

The ceiling 25 can extend above at least part of the passenger compartment 20.

For example, if the rail vehicle is a subway, the ceiling 25 can extend along the whole car along the longitudinal direction X and/or along the whole respective passenger compartment(s) 20 along the longitudinal direction X.

The HVAC unit 15 can be positioned at a first extremity of the respective car along the longitudinal direction X, for example above a vestibule of the respective car.

Alternatively, the HVAC unit 15 can have an intermediate position between the first extremity of the respective car and a second extremity of this car along the longitudinal direction X.

If a plurality of ceiling outlet holes 30 are provided, the outlet holes 30 can be distributed, for example evenly distributed, along a portion of the lower surface 25A extending over a respective passenger compartment 20.

Alternatively, the HVAC unit 15 is positioned under a floor of the car (not represented) *mutatis mutandis.*

The HVAC unit 15 is configured for receiving at least one inlet air flow 35 through at least one respective HVAC inlet hole 15A, and for generating at least one outlet air flow 40 through at least one respective HVAC outlet hole 15B.

The HVAC is configured for controlling a flow of each outlet air flow 40 and/or a temperature of each outlet air flow 40.

The outlet air flow 40 is intended to circulate directly or indirectly in at least one passenger compartment 20 through the outlet holes 30.

The rail vehicle can comprise one or more ducts 45 for fluidly connecting at least one HVAC outlet hole 15A with at least one ceiling outlet hole 30.

In a particular embodiment, as shown in figure 3, a duct 45 can be defined by part of the lower surface 25A and part of the upper surface 25B of the ceiling 25.

The duct 45 can be thermally insulated.

For example, at least part of a duct inner surface 45IN of the duct 45 is formed in or covered with a thermal insulating material 50.

Advantageously, the thermal insulating material 50 has a constant thickness e all along an elevation direction Y orthogonal to the longitudinal direction.

Advantageously, the thermal insulating material 50 is provided in the form of thermal insulating plates extending along the elevation direction Y between a planar inner surface 50A and a planar outer surface 50B attached to the duct inner surface 45IN of the duct 45.

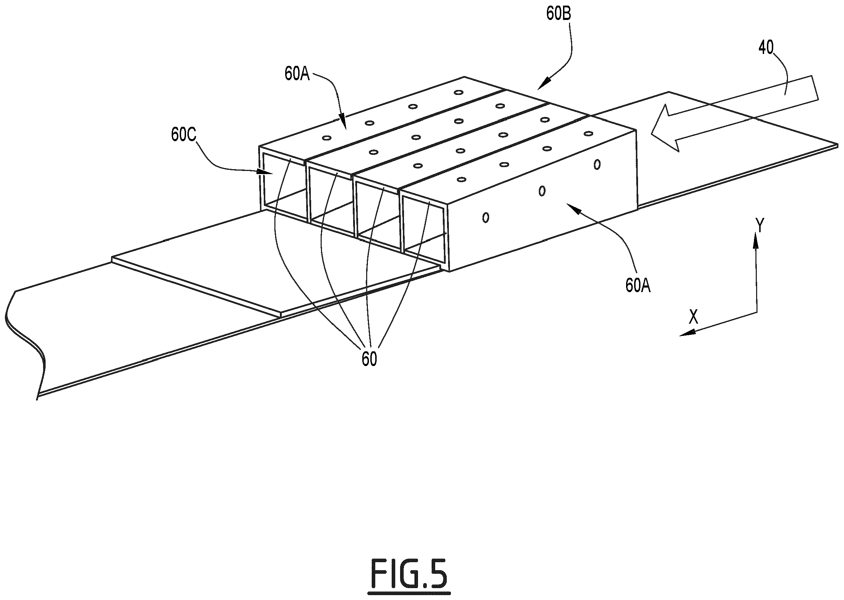

The rail vehicle can comprise a noise damper 55, as shown in figures 3 and 5.

The noise damper 55 is configured to dampen noise coming from the HVAC unit 15. To this end, the noise damper 55 can be positioned downstream the HVAC unit 15 relative to the outlet air flow 40, as shown in figure 3. Alternatively or in addition, the noise damper 55 can be positioned downstream the HVAC unit 15 relative to the outlet air flow 40, for example in cases where the HVAC unit 15 draws in air from the passenger compartment 20.

The noise damper 55 comprises at least one acoustic cell 60 configured for receiving at least part of the air flow 40 and for dampening the associated noise, preferably with low impact on the flow pattern of the air flow 40.

For example, each acoustic cell 60 has at least one lateral wall 60A extending along the longitudinal direction X between an inlet open end 60B and an outlet open end 60C.

The lateral wall 60A may be partially or entirely made of or covered with a sound insulating material 61 having a broadband absorption spectrum. Typically, such a conventional sound insulating material 61 is efficient for absorbing sounds having a frequency of more than 500 Hz or even more than 1000 Hz.

In the example of figure 5, the noise damper 55 comprises four tapered acoustic cells 60.

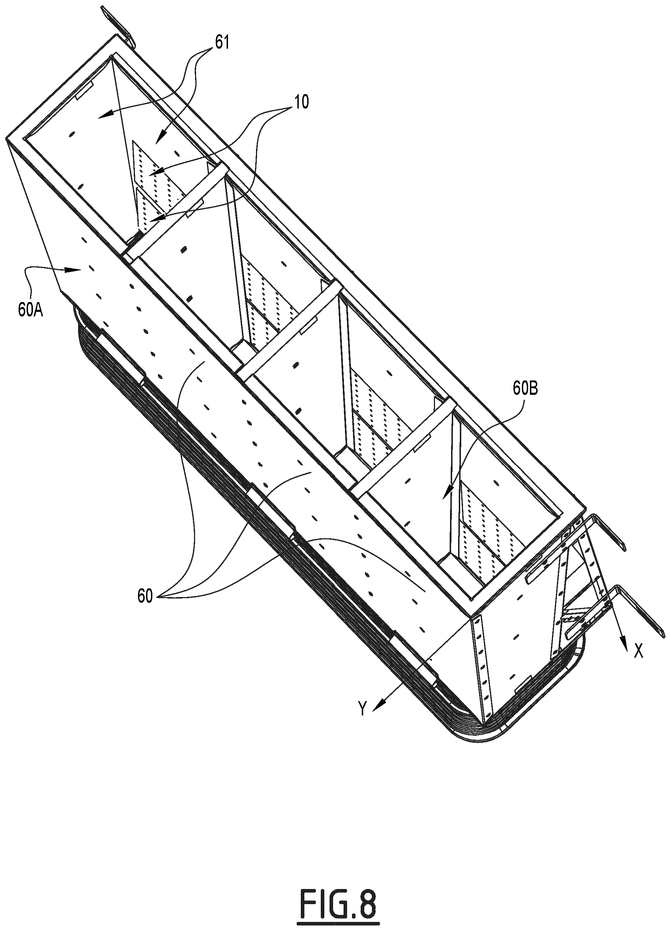

As can be seen in the additional view of figure 8, in this example, each acoustic cell can be provided with one or more sound absorption plates 10, for example two sound absorption plates 10, and each lateral wall 60A of each acoustic cell 60 can be entirely covered with the sound insulation material 61 except where the sound absorption plates10 are positioned.

The sound absorption plates 10 act in complement to the sound insulation material 61 by absorbing sounds at lower frequencies, at which conventional sound insulation materials 61 have poor absorption properties.

Each sound absorption plate 10 extends along a plate elevation direction Y1 between a planar inner wall 65 and a planar outer wall 70, and comprises a plurality of resonator units 75.

The planar outer wall 70 extends along a plate longitudinal direction X1 and a plate transverse direction Z1 orthogonal to the plate longitudinal direction X1.

The planar outer wall 70 is intended to be in contact with a wall of the rail vehicle, preferably with a planar wall of the rail vehicle.

The planar outer wall 70 of a given absorption plate 10 can be in contact with a wall of the HVAC unit 15 or with a wall of the noise damper 55 if any.

The planar outer wall 70 of a given absorption plate 10 can also be in contact with a wall of a duct 45 or of a sheath for distributing the outlet air flow 40 in the passenger compartment 20.

In the example of figure 3, the planar outer wall 70 is in contact with the duct inner surface 45IN.

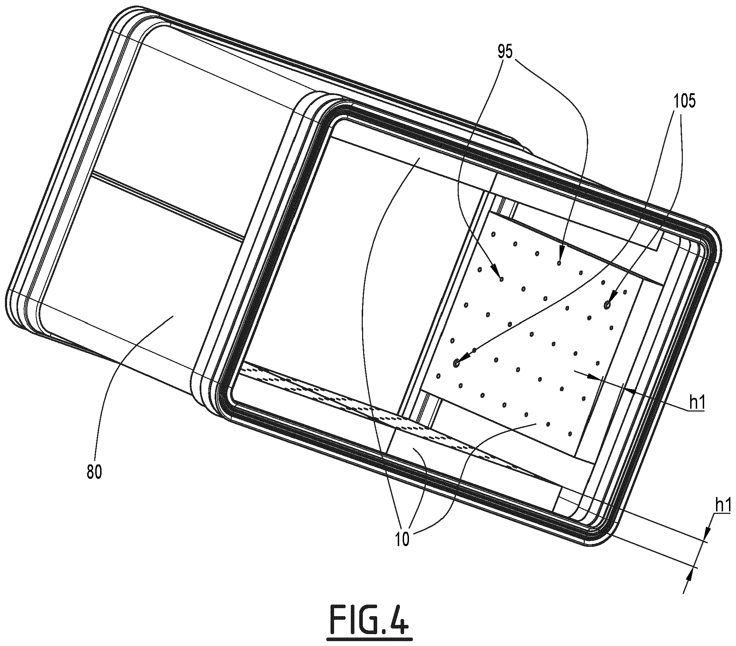

The planar outer wall 70 of a given absorption plate 10 can also be in contact with a wall of a chimney connector 80 connecting the HVAC unit 15 with an air flow distribution tube configured for distributing the air flow 40 in the passenger compartment 20, in particular in case the HVAC unit 15 is positioned in a vestibule of the respective car, as shown in figure 4.

Since the planar outer wall 70, its positioning along the respective wall of the rail vehicle is easy. In particular, the sound absorption plate 10 can replace part of potential thermal insulation plates 50, as shown in figure 3.

The planar inner wall 65 is intended to be in contact with an air flow F flowing in or from the HVAC unit 15.

In the example of figure 3, the air flow F is formed by the outlet air flow 40 flowing from the HVAC unit 15 after its circulation through the noise damper 55.

The planar inner wall 65 extends parallel to the planar outer wall, i.e. along the plate longitudinal direction X1 and the plate transverse direction Z1.

Hence, the sound absorption plate 10 has a uniform plate height h1 along a plate elevation direction Y1 orthogonal to the plate longitudinal direction X1 and to the plate transverse direction Z1.

The plate height h1 can be equal to the thickness e of an adjoining thermal insulation plate 50. In this case, integration of the sound absorption plate 10 is easy and the flow pattern of the outlet air flow 40 is very little impacted.

The planar inner wall 65 is here flush with the thermal insulation plate 50.

The plurality of resonator units 75 are distributed in the sound absorption plate 10 along the longitudinal direction X1 and/or along the plate transverse direction Z1.

The resonator units 75 are, for example, arranged in matrix form.

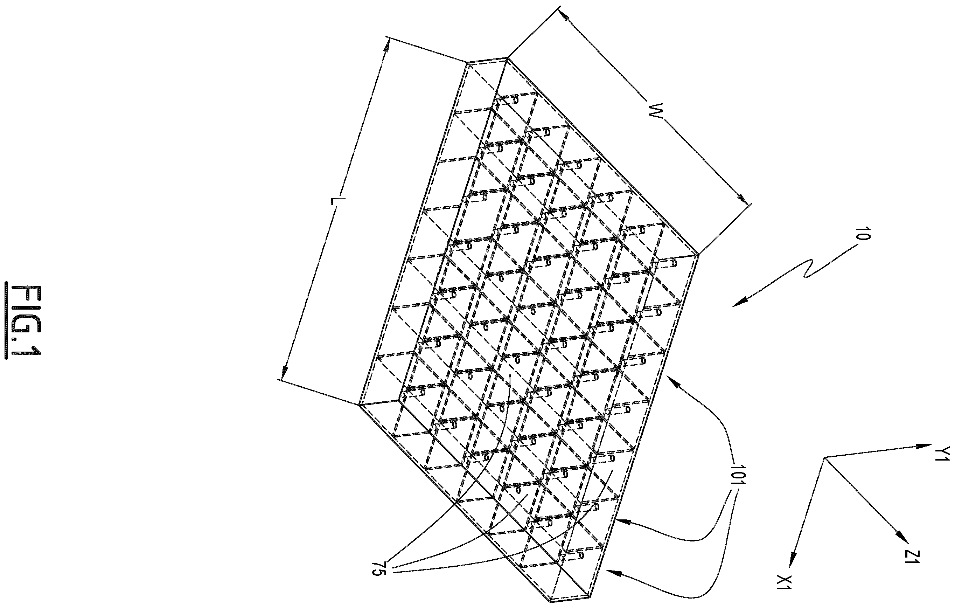

The resonator units 75 can be adjoining along the longitudinal direction X1 and/or along the plate transverse direction Z1, as shown in figure 1.

The resonator units 75 can all have a same external shape, for example a parallelepiped shape, as shown in figure 1.

The resonator units 75 can all have same external dimensions, as shown in figure 1.

The resonator units 75 can be made of a material having eigenmodes of vibration the frequencies of which are much higher than the frequencies of the sound to be dampened.

In particular, the material may be rigid enough and/or thicknesses of walls forming a given resonator unit 75, for example including the inner wall 65 and/or the outer wall 75, may be chosen, such that frequencies of eigenmodes of vibration the resonator unit 75 may be high enough, in particular more than a predetermined lower threshold.

The resonator units 75 can comprise, or consist of, a thermoset polymer such as polycarbonate.

Each resonator unit 75 comprises a resonating chamber 85 and a cylindrical internal neck 90.

Resonating chambers 85 of adjacent resonator units 75 are, for example, separated by a wall, here a shared wall.

The neck 90 extends over a neck length h2 along the plate elevation Y1 direction, between a first opening 95 flush with the inner wall 65 and a second opening 100 located inside the resonating chamber 85.

Since the first openings 95 of all the necks 90 of a given sound absorption plate 10 are flush with the inner wall 65, the sound absorption plate 10 has low impact on the flow pattern of the air flow F, and thus on the efficiency of the ventilation and/or air-conditioning and/or heating of the passenger compartment(s) 20.

In a particular embodiment, the first opening 95 is centered in the resonator unit 75 relative to the longitudinal direction X1 and/or relative to the plate transverse direction Z1, as shown in figure 1.

This provision also allows a homogenous dissipation of the energy of the air flow F in the respective resonator unit 75 and hence, higher efficiency of the sound absorption plate 10.

Two or more resonator units 75 of a given sound absorption plate 10 can have the same neck length h2.

At least two resonator units 75 of a given sound absorption plate 10 can have different neck lengths h2.

As shown in figure 1, the sound absorption plate 10 comprises successive rows 101 of resonator units 75, the rows 101 being adjoining along the plate longitudinal direction X1.

Each row 101 comprises a plurality of adjoining resonator units 75 along the plate transverse direction Z1.

At least two resonator units 75 of a given row 101 can have different neck lengths h2. In particular, all the resonator units 75 of a given row 101 can have different neck lengths h2.

The necks 90 of two or more resonator units 75 of a given sound absorption plate 10 can have the same cross-sectional area orthogonally to the plate elevation direction Y1.

The necks 90 of at least two resonator units 75 of a given sound absorption plate 10 can have different cross-sectional areas orthogonally to the plate elevation direction Y1.

The necks 90 of at least two resonator units 75 of a given row 101 can have different cross-sectional areas orthogonally to the plate elevation direction Y1. In particular, the necks 90 of all the resonator units 75 of a given row 101 can have different cross-sectional area orthogonally to the plate elevation direction Y1.

All the rows 101 can be identical.

Alternatively, at least two rows 101 can have be different in terms of neck length(s) h2 and/or of cross-sectional areas of the necks 90 orthogonally to the plate elevation direction Y1.

The cylindrical neck 90 has for example a circular or polygonal shape orthogonally to the plate elevation direction Y1.

The necks 90 of two or more resonator units 75 of a given sound absorption plate 10 can have the same shape or different shapes orthogonally to the plate elevation direction Y1.

The resonating chamber 85 has a void inner volume V intended to be filled with air. The void inner volume V depends on the neck length h2 and on the cross-sectional area of the neck orthogonally to the plate elevation direction Y1.

The air filling the void inner volume V can absorb part of the energy of the air flow F in at least one respective absorption band associated with a lower cutoff frequency and an upper cutoff frequency and a resonance frequency comprised between the lower and upper cutoff frequencies.

The lower cutoff frequency, the upper cutoff frequency and the resonance frequency depend on the void inner volume V and/or neck length h2 and/or the cross-sectional area of the neck orthogonally to the plate elevation direction Y1.

Even if all the resonator units 75 have the same external dimensions, in particular the same height h1, part of or all the resonator units 75 of the sound absorption plate 10 or of a given row 101 can have different inner volumes V and/or necks 90, such that all the resonator units 75 of the sound absorption plate 10 or of the row 101 have different lower cutoff frequencies and/or upper cutoff frequencies and/or resonance frequencies.

Hence, it is possible to design a sound absorption plate 10, and in particular a given row 101, such that the individual absorption bands of the different resonator units 75 taken together form a global absorption band of the sound absorption plate 10 meeting a specific absorption requirement.

For example, the global or individual absorption band is comprised in the range [100 Hz, 600 Hz], or in the range [150 Hz, 550 Hz], or in the range [200 Hz, 500 Hz], or in the range [240 Hz, 450 Hz].

This can for example be achieved with a plate height h1 of the order of a tenth of millimeters, for example comprised from 10 mm to 40 mm, more particularly comprised from 17 mm to 23 mm, and necks 90 having the shape of a revolution cylinder with a diameter of the order of a few millimeters, for example comprised from 1 mm to 5 mm. In this case, a given resonating chamber 85 can typically have a length comprised from 10 mm to 50 mm, for example more specifically comprised from 20 mm to 40 mm, along the longitudinal direction X1, and/or a width comprised from 10 mm to 50 mm, for example more specifically comprised from 20 mm to 40 mm, along the transverse direction Z1.

This specific absorption requirement can be met under spatial constraints, such as a constraint regarding the plate height h1, for example to be equal to the thickness e of an adjoining thermal insulation plate 50, and/or a plate length L along the plate longitudinal direction X1 and/or a plate width W along the plate transversal direction Z1.

Hence, the sound absorption plate 10 allows high modularity and easy integration in the rail vehicle.

In particular, the sound absorption plate 10 can be integrated or post-mounted in the rail vehicle without specific adaptation of the design of the rail vehicle.

The sound absorption plate 10 can for example replace part of the thermal insulated plates 50, as shown in figure 3.

In a particular embodiment, the lower cutoff frequency and/or the upper cutoff frequency and/or the resonance frequency of a given resonator unit 75 is chosen according to a rotation frequency of blades of a fan of the HVAC unit, such as a nominal rotation frequency or an upper or lower rotation frequency.

For example, the resonance frequency is an integer multiple of a rotation frequency of said blades.

In a particular embodiment, the absorption bands of at least two resonator units 75 partially overlap.

In a particular embodiment, the resonator units 75 of a given sound absorption plate 10 differ at most by their neck 90. This facilitates the industrialization of the manufacturing of the sound absorption plate 10.

In a particular embodiment, the resonator units 75 of a given sound absorption plate 10 differ at most by the cross-sectional area of the necks 90 orthogonally to the plate elevation direction Y1 of their cylindrical neck 90.

This makes the industrialization of the manufacturing of the sound absorption plate 10 even easier, in particular in case of 3D-printing.

In a particular embodiment, the first openings 95 of the resonator units 75 of a given sound absorption plate 10 are evenly spaced apart along the plate longitudinal direction X1 and/or along the transverse direction Z1, as represented in figures 1, 2 and 4.

The sound absorption plate 10 can further comprise at least one through tapped hole 105.

Thank to this provision, the sound absorption plate 10 can be removably attached to the respective wall of the rail vehicle, by insertion of a screw in the tapped hole up to said wall of the rail vehicle.

As shown in figure 5, the tapped hole 105 can be equidistant from at least two first openings 95 of at least two adjoining resonator units 75.

The tapped hole 105 is provided in between the resonating chambers 85 of at least two adjoining resonator units 75, here four resonator units 75 that share a corner, more particularly, at least partly, in the wall separating the resonating chambers 85.

In this case, the acoustic performances of the sound absorption plate 10 are not impacted by the tapped hole 105.

Alternatively or in addition, the sound absorption plate 10 can be glued to the respective wall of the rail vehicle.

The number and/or the positions of sound absorption plate 10 and/or the dimensions of the resonator units 75 can be chosen according to the design of the rail vehicle, in particular of the HVAC unit 15.

In case the sound absorption plate 10 is attached to a wall of the noise damper 55, the acoustic performances of the noise damper 55 are significantly improved, in particular at low frequencies, which are not addressed with a potential conventional sound insulating material 61 partially or entirely covering lateral wall 60A, having a typical broadband absorption spectrum at medium and/or high frequencies, as shown in figure 8.

The sound insulation plate 10 according to the invention is easy to manufacture, for example by injection-molding and/or 3D-printing.

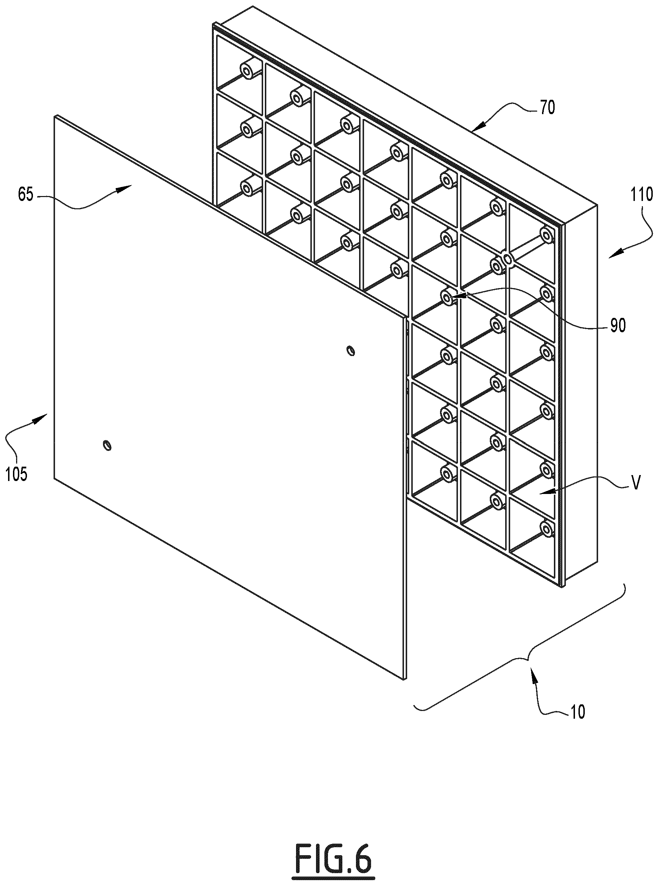

In case of a manufacturing process based on injection-molding, described in reference to figure 6, the sound insulation plate 10 can comprise a first part 105 defining the planar inner wall 65, and a second part 110 defining the planar outer wall 70 and comprising the resonator units 75. The first part 105 and/or the second part 110 can be produced by at a respective injection-molding step. The first part 105 and the second part 110 can subsequently be welded to one another in a subsequent welding step.

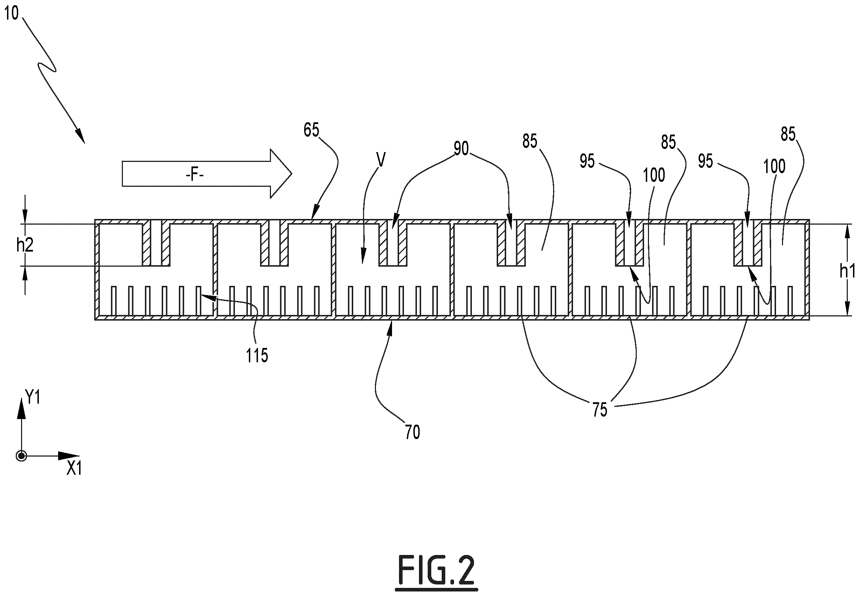

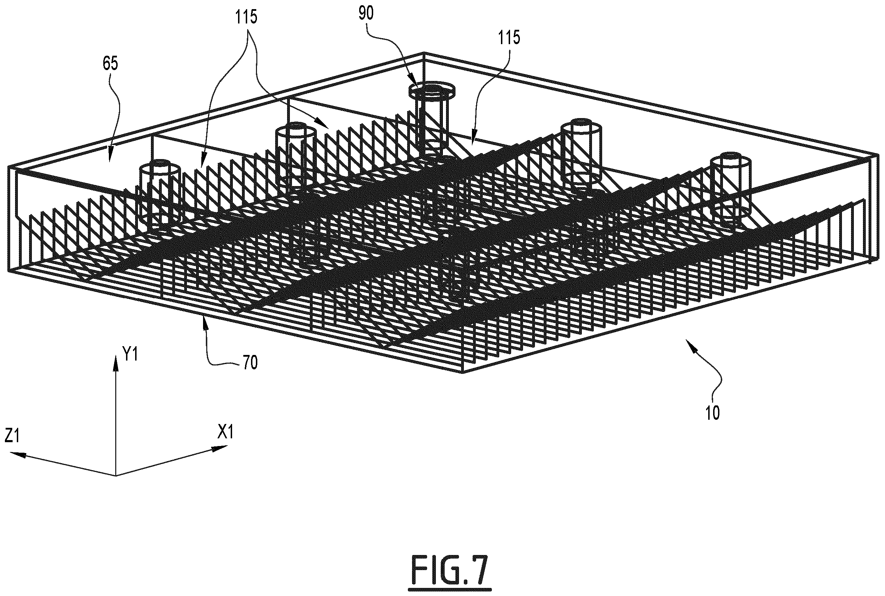

In case of a manufacturing process based on 3D-printing, described in reference to figure 2 and figure 7, the sound insulation plate 10 may comprise a plurality of fins 115 configured for allowing to produce a one piece sound insulation plate 10. In this case, the 3D-printing step comprises the formation of successive layers, starting from the inner wall 65 towards the outer wall 70.

In this case, the successive layers may be configured to form the fins 115 allowing to support and form the outer wall 70, which is continuous, by 3D-printing.

In this case, the volume of the resonator units 75 is adapted to take into account the fins 115 so as to obtained the wished void inner volume V of the respective resonating chambers 85.

## Claims

1. Sound absorption plate (10) configured for sound absorption in a rail vehicle HVAC unit (15),
the sound absorption plate (10) extending along an elevation direction (Y1) between a planar inner wall (65) intended to be in contact with an air flow (F, 40) flowing in or from the HVAC unit and a planar outer wall (70),
the sound absorption plate (10) comprising a plurality of resonator units (75), each resonator unit comprising:
- a resonating chamber (85) having a void inner volume (V), and
- a cylindrical internal neck (90) extending along the elevation direction (Y1) between a first opening (95) flush with the inner wall (65) and a second opening (100) located inside the resonating chamber (85).

2. Sound absorption plate (10) according to claim 1, wherein the void inner volume (V) of the resonating chamber (85) is the same for all the resonator units (75).

3. Sound absorption plate (10) according to any of the preceding claims, wherein at least two resonator units (75) differ by a length (h2) of the neck (90) along the elevation direction (Y1) and/or a cross-sectional area of the neck (90) orthogonally to the elevation direction (Y1).

4. Sound absorption plate (10) according to any of the preceding claims, wherein at least two resonator units (75) have identical necks (90).

5. Sound absorption plate (10) according to any of the preceding claims, wherein for each resonator unit (75), the void inner volume (V) and/or a length (h2) of the neck (90) along the elevation direction (Y1) and/or a cross-sectional area of the neck (90) orthogonally to the elevation direction (Y1) is chosen such that a resonance frequency of the resonator unit (75) is comprised in the range [150 Hz; 600 Hz].

6. Sound absorption plate (10) according to any of the preceding claims, wherein the first openings (85) of the resonator units (75) are evenly spaced apart along a longitudinal direction (X1) of the inner wall (65) orthogonal to the elevation direction (Y1) and/or along a transverse direction (Z1) of the inner wall (65) orthogonal to the longitudinal direction (X1) and to the elevation direction (Y1).

7. Sound absorption plate (10) according to claim 6, further comprising at least one through tapped hole (105) equidistant from at least two first openings (85) of at least two adjoining resonator units (75).

8. Rail vehicle comprising at least one HVAC unit (15) and at least one sound absorption plate (10) according to any of the preceding claims.

9. Rail vehicle according to the preceding claim, wherein at least one of the at least one sound absorption plate (10) is attached on an inner wall of the HVAC unit (15).

10. Rail vehicle according to the any of claims 8 to 9, wherein at least one of the at least one sound absorption plate (10) is positioned downstream and/or upstream a respective HVAC unit (15), preferably attached on a wall of a sheath for distributing the air flow (F, 40) in the rail vehicle or on a wall of a chimney connector connecting the HVAC unit (15) with an air flow distribution tube for distributing the air flow (F, 40) in the rail vehicle or on a wall of a noise damper (55).

11. Rail vehicle according to any of claims 8 to 10, wherein the inner wall of the at least one sound absorption plate (10) is flush with an inner surface (50A) of an adjoining thermal insulation plate (50).
